# EUROPEAN PATENT SPECIFICATION

(11) **EP 4 209 341 B1**
(45) Date of publication and mention of the grant of the patent: **30.09.2026**
(21) Application number: 21864103.3
(22) Date of filing: 18.08.2021
(51) Int. Cl.: B32B 7/025

(54) **CONDUCTIVE LAYERED PRODUCT, OPTICAL DEVICE USING SAME, AND MANUFACTURING METHOD FOR CONDUCTIVE LAYERED PRODUCT**
LEITFÄHIGES SCHICHTPRODUKT, OPTISCHE VORRICHTUNG DAMIT UND HERSTELLUNGSVERFAHREN FÜR EIN LEITFÄHIGES SCHICHTPRODUKT
PRODUIT STRATIFIÉ CONDUCTEUR, DISPOSITIF OPTIQUE UTILISANT CELUI-CI, ET PROCÉDÉ DE FABRICATION POUR PRODUIT STRATIFIÉ CONDUCTEUR

(30) Priority: 04.09.2020 JP 2020149487; 09.08.2021 JP 2021130412
(43) Date of publication of application: 12.07.2023
(73) Proprietor: Dexerials Corporation, Shimotsuke-shi, Tochigi 323-0194 (JP)
(72) Inventor: SHIOTA, Keisuke, Shimotsuke-shi, Tochigi 323-0194 (JP); ONO, Yukihiro, Shimotsuke-shi, Tochigi 323-0194 (JP); TEZUKA, Kaori, Shimotsuke-shi, Tochigi 323-0194 (JP); WAKO, Hitoshi, Shimotsuke-shi, Tochigi 323-0194 (JP)
(74) Representative: Müller-Boré & Partner Patentanwälte PartG mbB
(86) International application number: PCT/JP2021/030121
(87) International publication number: WO 2022/050045

(56) References cited:
- WO-A1-2015/166850
- WO-A1-2016/157987
- WO-A1-2017/170673
- WO-A1-2019/044896
- JP-A- 2007 250 430
- JP-A- 2014 065 260
- JP-A- 2014 069 572
- JP-A- 2014 087 931
- JP-A- 2016 018 288
- JP-A- 2016 506 037
- JP-A- 2017 033 897
- JP-A- 2019 194 719
- JP-A- 2020 001 232
- JP-A- 2020 505 736
- KR-A- 20140 116 148
- US-A1- 2004 001 915

## Description

### TECHNICAL FIELD

The present technology relates to a conductive layered product used in, for example, a touch panel, a light-dimming element, an electrophoretic optical element, a light-emitting element, an antenna, and the like. The present application claims priority based on Japanese Patent Application No. 2020-149487 filed in Japan on September 4, 2020 and Japanese Patent Application No. 2021-130412 filed in Japan on August 9, 2021.

### BACKGROUND TECHNOLOGY

Conductive layered products such as conductive films are widely used in displays, touch panels, electrochromic devices, and the like, and high transparency and low resistance are required. As the conductive film, for example, an ITO (Indium Tin Oxide) film is widely used.

However, although the ITO film can be made highly transparent with a total light transmittance of 88% or more by using an optical adjustment layer or the like, the resistance value is approximately 100 Ω/square, and therefore it cannot be said that the resistance is low. Furthermore, there is also an issue with the use of toxic materials (indium) in ITO films.

Therefore, a layered conductive thin film (conductive layered product) in which a metal layer (for example, a metal thin film made of silver or a silver alloy with a thickness of about 5-30nm) is sandwiched by a transparent thin film material such as a metal oxide layer is drawing attention. The conductive layered products can have, for example, a resistance value of about 5 to 30 Q/square and a total light transmittance of 90% or more by adjusting the film thickness, and therefore has been used, for example, as a film formed on a glass surface as an electromagnetic shield of a plasma display panel (PDP).

For example, Patent Document 1 teaches a transparent conductive layered product having a structure in which a silver-palladium alloy as a silver thin film layer is sandwiched by a plurality of metal oxide layers (aluminum-added zinc oxide), and teaches that the visible light transmittance of this transparent conductive layered product is 78%.

Thus, when a transparent conductive layered product, in which a metal layer mainly composed of silver is sandwiched by metal oxides, is formed on glass, high transmittance and low resistance can be obtained. However, when this type of conductive layered product is formed on a film, transparency is lost compared to when forming a film on glass, and there is a tendency for the resistance value to rise.

### CITATION LIST

### PATENT DOCUMENTS

Patent Document 1: International Patent Publication No. WO 2017/170673

US 2004/001915 A1 discloses a conductive layered product.

### SUMMARY OF THE INVENTION

### PROBLEM TO BE SOLVED BY THE INVENTION

The present technology, which has been proposed in view of such conventional circumstances, provides a conductive layered product that achieves both low electrical resistance and high transmittance, various optical element comprising the conductive layered product, and a manufacturing method for the conductive layered product.

### MEANS FOR SOLVING THE PROBLEM

As a result of diligent research by the inventors of the present application, the present invention was achieved by discovering that a low electrical resistance and a high transmittance can both be achieved by making the arithmetic mean roughness of the interface of the transparent substrate side of the first metal oxide layer in a conductive layered product, in which a first metal oxide layer, a metal layer, and a second metal oxide layer are layered in this order from the transparent substrate side, a specific value or less.

That is, the conductive layered product, as defined in appended claim 1, is obtained by layering a first metal oxide layer, a metal layer, and a second metal oxide layer on at least one surface of a transparent substrate in this order from the transparent substrate side, and the arithmetic mean roughness of an interface of the first metal oxide layer on the transparent substrate side is 2.0 nm or less.

The optical device according to the present technology uses the conductive layered product as at least one of the positive or negative electrode.

The method for manufacturing a conductive layered product, as defined in appended claim 10, comprises layering a first metal oxide layer, a metal layer, and a second metal oxide layer on at least one surface of a transparent substrate, in this order from the transparent substrate side, and the arithmetic mean roughness of an interface of the first metal oxide layer on the transparent substrate side is 2.0 nm or less.

### EFFECT OF THE INVENTION

According to the present technology, the formation of a light absorbing layer at each interface of the conductive layered product can be suppressed, and therefore, a conductive layered product having both low electrical resistance and high transmittance can be provided.

### BRIEF DESCRIPTIONS OF THE DRAWINGS

[FIG. 1] FIG. 1 is a cross-sectional view schematically illustrating a configuration example of a conductive layered product to which the present technology is applied.
[FIG. 2] FIG. 2 is a cross-sectional view schematically illustrating a configuration example of a conductive layered product where the present technology is applied.
[FIG. 3] FIG. 3 is a perspective view illustrating an internal configuration example of a thin film forming device.

### EMBODIMENTS FOR CARRYING OUT THE INVENTION

Below, a conductive layered product to which the present technology is applied, an optical device using this, and a manufacturing method for a conductive layered product are described in detail with reference to the drawings. In addition, the present technology is not limited to only the embodiments below, and it is obvious that various changes are possible within the scope of the claims. Furthermore, the drawings are schematic, and the ratios and the like of each dimension may differ from the actual ones. The specific dimensions and the like should be determined in view of the following descriptions. Moreover, it is obvious that portions where the mutual dimensional relationships and ratios are different are included among the drawings.

### [Conductive Layered Product]

### <First Embodiment>

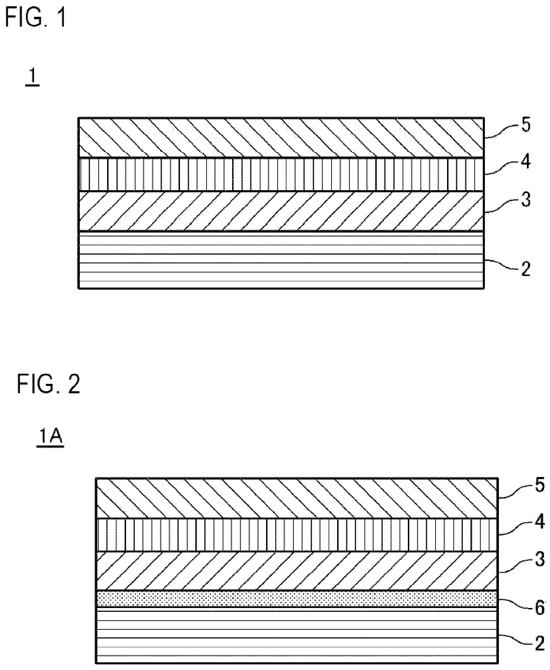

FIG. 1 is a cross-sectional view schematically illustrating a configuration example of a conductive layered product 1 to which the present technology is applied. As illustrated in FIG. 1, the conductive layered product 1 is obtained by layering a first metal oxide layer 3, a metal layer 4, and a second metal oxide layer 5 on at least one surface of a transparent substrate 2 in this order from the transparent substrate 2 side. Also, in the conductive layered product 1, the arithmetic mean roughness (Ra) of the interface of the first metal oxide layer 3 on the transparent substrate 2 side is 2.0 nm or less.

Conductive films used in displays, electrochromic devices, and the like are required to achieve both low electrical resistance and high transmittance. Here, when a multilayer film, wherein a metal layer (for example, a metal thin film such as silver) is sandwiched by metal oxide layers, is formed on a transparent substrate (for example, a resin film such as a conductive film) suitable for, for example, a roll-to-roll method, resistance and transmittance both tend to deteriorate compared to when forming a film on glass.

In the present technology, by making the arithmetic mean roughness of the interface of the first metal oxide layer 3 on the transparent substrate 2 side to be 2.0 nm or less, a conductive layered product can be obtained that achieves both low electrical resistance and high transmittance in a similar manner as when layering the first metal oxide layer 3, the metal layer 4, and the second metal oxide layer 5 on glass even when layering on a film.

This is thought to be because by setting the arithmetic mean roughness of the interface of the transparent substrate 2 side of the first metal oxide layer 3 to 2.0 nm or less, it is suppressed that the metal thin films that carry conductivity (the first metal oxide layer 3, the metal layer 4, and the second metal oxide layer 5) become localized by aggregating and does not become a continuous film, and an increase in surface resistance value and an increase in light absorption can be suppressed.

In this manner, according to the conductive layered product 1, the surface resistance value (electrical resistance value) can be lowered and the total light transmittance can be increased, and for example, the surface resistance value can be 10 Q/square or less, and the total light transmittance can be 90% or more. The measuring method of the surface resistance value and the total light transmittance is the same as the measuring method of the embodiments described below.

The conductive layered product 1 can be applied to a power-saving, high-performance optical device, for example, a touch panel, a light-dimming element, an electrophoretic optical element, a light-emitting element, an antenna, a display material, an electrochromic device, an electromagnetic shielding material, and the like in which the conductive layered product is used as at least one of the positive or negative electrode.

A specific example of the layer configuration of the conductive layered product 1 will be described below.

### <Transparent Substrate>

The surface of the transparent substrate 2 that contacts the first metal oxide layer 3 has an arithmetic mean roughness of 2.0 nm or less, may be 1.5 nm or less, and may be 1.0 nm or less. The lower limit value of the arithmetic mean roughness of the surface that contacts the first metal oxide layer 3 of the transparent substrate 2 is not particularly limited, and can be, for example, 0.01 nm or more, and may be 0.1 nm or more.

As the transparent substrate 2, for example, one made from either glass or a resin film can be used. When a resin film is used as the transparent substrate 2, it can be manufactured by a roll-to-roll method, so that production efficiency can be improved.

The material of this type of resin film is not particularly limited, but, for example, polyethylene terephthalate (PET: polyethylene terephthalate), polyethylene naphthalate (PEN: polyethylene naphthalate), polyaramide, polyimide, polycarbonate, polyethylene, polypropylene, triacetylcellulose (TAC: triacetylcellulose), polycycloolefin (COC: Cyclic Olefin Copolymer, COP: Cyclic Olefin Copolymer), and the like can be used.

The thickness of the transparent substrate 2 is not particularly limited, but taking into consideration the ease of handling during manufacturing and the thinness of the member when using a resin film, it is preferable to be 20 to 200 µm.

In the conductive layered product 1, the transparent substrate 2 does not need to have a light transmittance of 100%, and may be transparent within the range of exhibiting the effect of the present technique, and preferably has a light transmittance of 90% or more, for example.

In addition, from a viewpoint of further improving the scratch resistance of the transparent substrate 2, thin films of, for example, an acrylic resin may be formed on both sides of the transparent substrate 2 by solution coating.

### <First Metal Oxide Layer>

The first metal oxide layer 3 is a composite oxide of zinc and tin. In the zinc and tin composite oxide, the ratio of tin can be, for example, 10 to 90 atom% relative to the total amount of zinc and tin. According to embodiments which are not according to the claims, the first metal oxide layer 3 may contain one or more elements other than zinc or tin in a range not exceeding 50 atom% relative to the total amount of zinc and tin.

According to embodiments which are not according to the claims, the first metal oxide layer 3 may be configured by a metal oxide containing no zinc. The first metal oxide layer 3 can be configured by an oxide of a substance having a small interaction with the metal layer 4. For example, when the metal layer 4 has silver as the main component, the first metal oxide layer 3 can be configured by an oxide of a substance having a small interaction with silver, such as Nb, Ti, Zr, Hf, Ta, W, Mo, and the like.

Specific examples of the first metal oxide layer 3 include a layer configured from Zinc Tin Oxide (ZTO: Zinc Tin Oxide), which is the material that is according to the claims and Nb₂O₅, which is a material that is not according to the claims.

The thickness of the first metal oxide layer 3 is not particularly limited, and can be set to be the film thickness at which the transmittance is the highest in accordance with the material configuration. The specific thickness of the first metal oxide layer 3 can be, for example, 30 to 80 nm.

The method for forming the first metal oxide layer 3 is not particularly limited, and a sputtering method is preferably used from a viewpoint of improving production efficiency and from a viewpoint of uniforming film thickness distribution.

The first metal oxide layer 3 may, in embodiments which are not according to the claims, be formed divided into a plurality of layers from a viewpoint of moisture resistance. In this case, among the plurality of first metal oxide layers 3, at least the layer in contact with the metal layer 4 is preferably configured by an oxide containing zinc or a composite metal oxide containing zinc.

### (Metal Layer)

The metal layer 4 layered on the first metal oxide layer 3 contains 90 atom% or more of silver and may additionally contain an additional element in a range that does not exceed 10 atom% overall. That is, the metal layer 4 can be configured by, for example, 90 atom% or more of silver or pure silver.

The thickness of the metal layer 4 is not particularly limited, but is preferably 5 nm or more. By the thickness of the metal layer 4 being 5 nm or more, formation as a continuous film becomes easier, and absorption generated by the island-like formation of the metal (for example, silver) configuring the metal layer 4 can be more effectively suppressed. The upper limit of the thickness of the metal layer 4 is not particularly limited, but is preferably less than 15 nm. By making the thickness of the metal layer 4 less than 15 nm, the light absorption inside the layer of the metal (for example, silver) configuring the metal layer 4 can be more effectively suppressed from becoming larger than the absorption at the interface.

The method for forming the metal layer 4 is not particularly limited, but it is preferable to continuously form the second metal oxide layer 5 after forming the metal layer 4. Furthermore, from a viewpoint of improving production efficiency and uniforming film thickness distribution, it is preferable to form the metal layer 4 using a sputtering method.

### <Second Metal Oxide Layer>

The second metal oxide layer 5 layered on the metal layer 4 can be configured by, for example, an oxide containing zinc (zinc oxide) or a composite oxide containing zinc similarly to the first metal oxide layer 3 described above.

The second metal oxide layer 5 contains aluminum, in accordance with the claims, and alternatively, and not according to the claims, gallium from a viewpoint of further improving the electrical conductivity, and is, according to the claims, an aluminum-doped zinc oxide (AZO). When the second metal oxide layer 5 contains at least one kind of aluminum and gallium, it is preferable that the second metal oxide layer 5 contains at least one kind of aluminum and gallium at 2 atom% or more, and it is more preferable that the second metal oxide layer 5 contains aluminum at 2 atom% or more. In the second metal oxide layer 5, the upper limit of the total amount of aluminum and gallium is not particularly limited, but can be, for example, 15 atom% or less, and may be 12 atom% or less, 10 atom% or less, 8 atom% or less, or 5 atom% or less. In particular, the second metal oxide layer 5 is preferably configured by a composite metal oxide containing zinc and 2 atom% or more of aluminum.

The thickness of the second metal oxide layer 5 is not particularly limited, and the thickness can be set to be the film thickness at which the transmittance is the highest depending on the material configuration. The specific thickness of the second metal oxide layer 5 can be, for example, 30 to 70 nm.

The method for forming the second metal oxide layer 5 is not particularly limited, but is preferably formed continuously after the formation of the metal layer 4. Furthermore, from a viewpoint of improving production efficiency and equalizing film thickness distribution, the second metal oxide layer 5 is preferably formed using a sputtering method.

The second metal oxide layer 5 may, in embodiments which are not according to the claims, be formed divided into a plurality of layers from a viewpoint of abrasion resistance. In this case, among the plurality of second metal oxide layers 5, at least the layer that contacts the metal layer 4 is preferably configured by an oxide containing zinc or a composite metal oxide containing zinc. Furthermore, among the plurality of second transparent material layers 5, layers other than the layer in contact with the metal layer 4 are preferably configured by a transparent oxide having electrical conductivity in order to maintain favorable electrical conductivity.

In addition, in the conductive layered product 1 illustrated in FIG. 1, the first metal oxide layer 3, the metal layer 4, and the second metal oxide layer 5 are layered in this order on one surface of the transparent substrate 2; however, the first metal oxide layer 3, the metal layer 4, and the second metal oxide layer 5 may be layered in this order on the other surface of the transparent substrate 2 or on both surfaces of the transparent substrate 2.

### <Second Embodiment>

FIG. 2 is a cross-sectional view schematically illustrating a configuration example of the conductive layered product 1A to which the present technology is applied. As illustrated in FIG. 2, the conductive layered product 1A is further provided with a resin layer 6 between the transparent substrate 2 and the first metal oxide layer 3, and an interface of the first metal oxide layer 3 on a transparent substrate 2 side is a surface of the resin layer 6. That is, the conductive layered product 1A is obtained by layering the resin layer 6, the first metal oxide layer 3, a metal layer 4, and a second metal oxide layer 5 on at least one surface of the transparent substrate 2 in this order from the transparent substrate 2 side, and the arithmetic mean roughness of an interface of the first metal oxide layer 3 on the transparent substrate 2 side is 2.0 nm or less. In this manner, the arithmetic mean roughness of the surface of the resin layer 6 on the first metal oxide layer 3 side is 2.0 nm or less, and may be 1.5 nm or less, 1.0 nm or less, and 0.7 nm or less. The lower limit value of the arithmetic mean roughness of the surface of the first metal oxide layer 3 side in the resin layer 6 is not particularly limited, and can be, for example, 0.01 nm or more, and may be 0.1 nm or more. Furthermore, the arithmetic mean roughness of the surface on the first metal oxide layer 3 side in the resin layer 6 may be in a range of, for example, 0.3 to 2.0 nm or in a range of 0.7 to 2.0 nm.

The resin layer 6 may contain a filler or may not contain the filler. The filler is, for example, a metal oxide in the form of particles. When the resin layer 6 contains a filler, the mean particle size of the filler may be 50 nm or less, for example, and may be within the range of 15 to 50 nm because the arithmetic mean roughness of the interface of the transparent substrate 2 side of the first metal oxide layer 3, that is, the surface of the resin layer 6, is easily adjusted to 2.0 nm or less. The mean particle size of the filler can be 800 nm or less, 20 to 100 nm, or 30 to 70 nm, for example, from a viewpoint of adhesion between the resin layer 6 and the first metal oxide layer 3 and adhesion between the resin layer 6 and the transparent substrate 2. Here, the mean particle size refers to a value measured by the BET method.

Specific examples of fillers include SiO₂ (silica), Al₂O₃ (alumina), TiO₂ (titania), ZrO₂ (zirconia), CeO₂ (ceria), MgO (magnesia), ZnO, Ta₂O₅, Sb₂O₃, SnO₂, and MnO₂, and the like. Among these, for example, silica is preferable from a viewpoint of obtaining a higher transmittance. Specific examples available in the market include the product names "IPA-ST-L" (silica sol) and "IPA-ST" (silica sol) manufactured by Nissan Chemical Corporation. Furthermore, functional groups such as acrylic groups and epoxy groups may be introduced into the surface of the filler in order to increase adhesion and affinity with the resin.

When the resin layer 6 contains a filler, the filler content (filler density) in the resin layer 6 can be, for example, 5 wt% or more, and may be 10 wt% or more, 20 wt% or more, 25 wt% or more, and 30 wt% or more. Furthermore, when the resin layer 6 contains a filler, the filler content in the resin layer 6 can be, for example, 35 wt% or less, and may be in the range of 10 to 35 wt% and 15 to 32 wt% because the arithmetic mean roughness of the surface of the resin layer 6 is easily adjusted to 2.0 nm or less.

The resin layer 6 can be configured by, for example, an ultraviolet curable resin, an electron beam curable resin, a thermosetting resin, a thermoplastic resin, a two-component mixing resin, or the like. It is preferable to use an ultraviolet curable resin for the resin layer 6 from a viewpoint that it can be efficiently formed by ultraviolet irradiation.

Examples of the ultraviolet curable resin include acrylic resins, urethane resins, epoxy resins, polyester resins, amide resins, silicone resins, and the like. Of these, it is preferable to use an acrylic UV-curable resin from a viewpoint of obtaining high transparency.

The acrylic UV-curable resin is not particularly limited, and can be suitably selected to use from bifunctional or trifunctional or higher polyfunctional acrylic monomers, oligomers, polymer components, and the like in view of hardness, adhesion, workability, and the like.

Specific examples of the bifunctional acrylate component include polyethylene glycol (600) diacrylate, dimethylol-tricyclodecane diacrylate, bisphenol AEO modified diacrylate, 1,9-nonanediol diacrylate, 1,10-decanediol diacrylate, propoxylated bisphenol A diacrylate, tricyclodecanedimethanol diacrylate, diethylene glycol diacrylate, neopentyl glycol diacrylate, 1,4-butanediol diacrylate, polyethylene glycol (200) diacrylate, tetraethylene glycol diacrylate, polyethylene glycol (400) diacrylate, cyclohexanedimethanol diacrylate, and the like. Specific examples available in the market include the product name "SR610" manufactured by Sartomer and the like.

Specific examples of the trifunctional or higher functional acrylate component include pentaerythritol triacrylate (PETA), 2-hydroxy-3-acryloyloxypropyl methacrylate, isocyanurate EO-converted triacrylate, ε-caprolactone-modified tris-(2-acryloxyethyl)isocyanurate, trimethylolpropane triacrylate (TMPTA), ε-caprolactone-modified tris(acroxyethyl)acrylate, and the like. Specific examples available in the market include the product name "CN968" manufactured by Sartomer, the product name "SR444" manufactured by Sartomer, and the like.

When an acrylic ultraviolet curable resin is used, the resin layer 6 may contain a leveling agent from a viewpoint of further improving smoothness. Specific examples of the leveling agent include silicone-based leveling agents, fluorine-based leveling agents, acrylic leveling agents, and the like, and one type or two or more types of these can be used. Of these, a silicone leveling agent is preferable from a viewpoint of coating film properties. Specific examples available on the market include the product name "BYK337" (polyether modified polydimethylsiloxane) made by BYK-Chemie Japan KK and the like.

The resin layer 6 is preferably formed by photopolymerizing an ultraviolet curable resin comprising a urethane(meth)acrylate oligomer, a trifunctional or higher functional (meth)acrylate monomer, a bifunctional (meth)acrylate monomer, and a photopolymerization initiator. The resin layer 6 may be formed by photopolymerizing an ultraviolet curable resin containing a urethane (meth)acrylate oligomer, a trifunctional or higher functional (meth)acrylate monomer, a bifunctional (meth)acrylate monomer, a photopolymerization initiator, and a filler (for example, silica fine particles).

### [Method for Manufacturing a Conductive Layered Product]

The conductive layered product 1 described above can be manufactured by, for example, layering the first metal oxide layer 3, the metal layer 4, and the second metal oxide layer 5 in this order from the transparent substrate 2 side on one surface of the transparent substrate 2.

The film formation of the first metal oxide layer 3, the metal layer 4, and the second metal oxide layer 5 can be formed using, for example, a thin film forming device described in Japanese Unexamined Patent Application Publication No. 2014-34701.

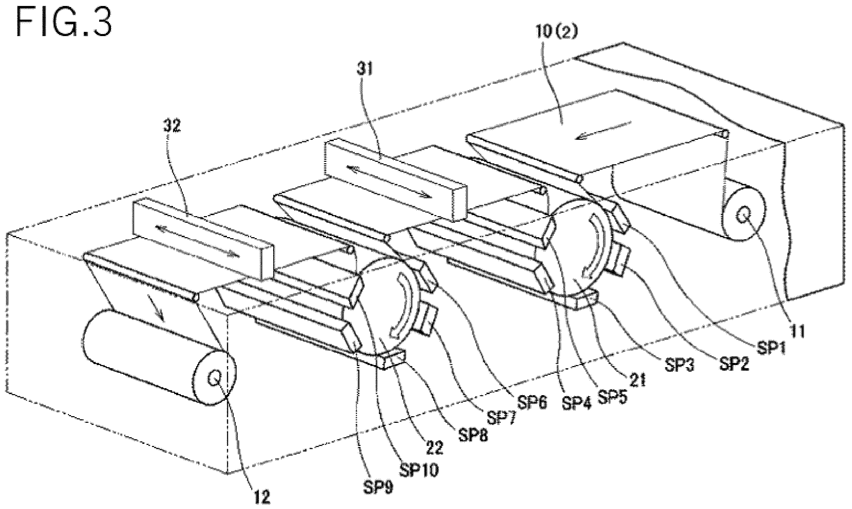

FIG. 3 is a perspective view illustrating an internal configuration example of the thin film forming device. This thin film forming device forms a film on a film substrate by sputtering using a roll-to-roll method, and is capable of arranging a plurality of sputtering targets, and is also capable of forming, once a roll is set, films of a plurality of different types of materials while maintaining a vacuum atmosphere.

Furthermore, in the thin film forming device, oxygen gas can be introduced into the plasma in addition to argon gas which is sputtering gas during sputtering, and thereby, an oxide of the target material can be formed on the film substrate.

The configuration of the thin film forming device is described in detail below. This thin film forming device comprises a measuring part, which continuously supplies a film substrate in the longitudinal direction, and which measures optical characteristics in the width direction of the thin film formed on the film substrate; a supply part, which is provided with a plurality of gas nozzles in the width direction of the film substrate, and which supplies a reactive gas to the vicinity of a target; and a control part, which controls the flow rate of the reactive gas jetted from each gas nozzle on the basis of the optical characteristics in the width direction of the measuring part, wherein the thin film forming device is capable of forming a thin film having a uniform thickness in the longitudinal direction and the width direction.

Further, as a specific configuration, it is preferable to provide a film forming part having a supply part, a sputter electrode for applying a voltage to the target, and a plasma measuring part for measuring the emission spectrum of the plasma in the width direction of the film substrate during film formation. Thus, the control part can control the flow rate of the reactive gas jetted from each gas nozzle and the voltage applied to the target on the basis of the optical characteristics in the width direction of the measuring part and the emission spectrum in the plasma measuring part, and can form a thin film having a more uniform thickness in the width direction.

Further, as a specific configuration, it is preferable to provide an unwinding part for unwinding the film substrate in the longitudinal direction, a film forming unit in which a plurality of film forming parts are arranged in the longitudinal direction of the film substrate, and a winding part for winding the film substrate on which the thin film is formed in the film forming unit. Consequently, a multilayer thin film can be formed from the unwinding to the winding of the film substrate. Further, it is preferable that the measuring parts are each installed after the film forming part, but it is preferable that the measuring parts are at least installed after the last film forming part, that is, between the film forming unit and the winding part. Thus, the optical characteristics of both of the single-layer thin film and the multi-layer thin film can be measured.

The thin film forming device illustrated in FIG. 3 makes a base film, which is a film substrate, travel while winding the base film around a can roll, and forms a thin film on the base film surface by sputtering.

In the thin film forming device, a base film 10 (transparent substrate 2) is supplied from an unwinding roll 11 as an unwinding part, and the base film 10 on which the thin film is formed is wound by a winding roll 12 as a winding part. Also, a first film forming chamber unit and a second film forming chamber unit which are film forming units are provided in a vacuum chamber. The vacuum chamber is connected to a vacuum pump for discharging air and can be adjusted to a predetermined degree of vacuum.

The first film forming chamber unit and the second film forming chamber unit are respectively provided with a first can roll 21 and a second can roll 22, and a plurality of sputter chambers SP1 to 10 being film forming parts are arranged so as to face the outer peripheral surfaces of the can rolls 21 and 22. In each sputter chamber (SP1 to 10), a predetermined target is attached to the electrode and a supply part having a plurality of gas nozzles in the width direction of the base film 10 is provided.

Also, the thin film forming device comprises an optical monitor 31 as a measuring part for measuring the optical characteristics between the first film forming chamber unit and the second film forming chamber unit, that is, after film formation by the sputtering chamber SP5. Thus, the film formation of the intermediate product after the first film forming chamber unit can be controlled, and the adjustment time during adjustment by the single layer can be reduced. Further, an optical monitor 32, which is a measuring part for measuring the optical characteristics after the second film forming chamber unit, that is, after the film is formed by the sputtering chamber SP10, is provided. Thus, the quality of the film formation of the final product after the second film formation chamber unit can be confirmed.

The optical monitors 31, 32, as described below, measure the optical characteristics in the width direction of the thin film formed on the base film 10 by an optical head that can scan in the width direction. By means of the optical monitors 31, 32, for example, the peak wavelength of reflectivity is measured as an optical characteristic and converted to an optical thickness, and thus an optical thickness distribution in the width direction can be obtained.

In the thin film forming device configured in this manner, the base film 10 (transparent substrate 2) is fed from the unwinding roll 11, the thin films (first metal oxide layer 3, metal layer 4, second metal oxide layer 5) are formed on the base film 10 when transported by the first can roll 21 and the second can roll 22, and the thin films of multiple layers can be obtained by winding by the winding roll 12. Here, the optical characteristics in the width direction of the thin film formed on the base film 10 are measured by optical monitors 31, 32, and the flow rates of the reactive gases from the gas nozzles provided in the width direction are controlled on the basis of the optical characteristics, whereby the thin film having a uniform thickness in the longitudinal direction and the width direction can be formed.

Furthermore, the conductive layered product 1A described above can be manufactured by, for example, forming a resin layer 6 on at least one surface of the transparent substrate 2, and then layering the first metal oxide layer 3, the metal layer 4, and the second metal oxide layer 5 in this order from the resin layer 6 side formed on the transparent substrate 2. The resin layer 6 can be formed using, for example, a resin composition such as the ultraviolet curable resin described above.

The arithmetic mean roughness of the surface of the first metal oxide layer 3 side of the resin layer 6 can be adjusted by, for example, the size (mean particle diameter) of the filler, the filler content (filler density) in the resin layer 6, the curing conditions of the resin, and the like.

When a filler is included in the resin layer 6, the content of the filler can be 20 to 50 wt% relative to the total solid content of the resin composition for forming the resin layer 6, from a viewpoint of, for example, adhesion between the resin layer 6 and the first metal oxide layer 3 and adhesion between the resin layer 6 and the transparent substrate 2. It is understood that the solid content of the resin composition is the entire component excluding the solvent, and the liquid monomer component is included in the solid content. Furthermore, the filler content may be a numerical range of the filler content in the resin layer 6 in the second embodiment of the conductive layered product described above.

The solvent used in the resin composition for forming the resin layer 6 is not particularly limited so long as the coating properties of the resin composition are satisfied, but, for example, safety is preferably considered. Specific examples of solvents include propylene glycol monomethyl ether acetate, butyl acetate, methyl 3-ethoxypropionate, ethyl 3-ethoxypropionate, ethyl cellosolve acetate, ethyl lactate, methyl 3-methoxypropionate, 2-heptanone, cyclohexanone, ethyl carbitol acetate, butyl carbitol acetate, propylene glycol methyl ether, and the like, and one or more of these can be used. Of these, propylene glycol monomethyl ether acetate and butyl acetate are preferably used from a viewpoint of coating properties.

When an ultraviolet curable resin is used as the resin composition for forming the resin layer 6, a photopolymerization initiator is used. Specific examples of the photopolymerization initiator include an alkylphenone-based photopolymerization initiator, an acylphosphine oxide-based photopolymerization initiator, a titanocene-based photopolymerization initiator, and the like. Specific examples available on the market include 1-hydroxycyclohexyl phenyl ketone (IRGACURE184, manufactured by BASF Corporation) and the like.

Furthermore, when an ultraviolet curable resin is used as the resin composition for forming the resin layer 6, a functionality imparting agent such as a hue adjusting agent, colorant, ultraviolet absorbing agent, antistatic agent, various thermoplastic resin materials, refractive index adjusting resin, refractive index adjusting particle, adhesion imparting resin, and the like may be further contained.

The resin layer 6 can be formed by, for example, the following method. First, the resin composition for forming the resin layer 6 is uniformly mixed and adjusted according to a normal method using a stirrer such as a disperser. Next, a resin composition for forming the resin layer 6 is applied on the transparent substrate 2. Then, the resin layer 6 can be formed by drying and curing the resin composition applied on the transparent substrate 2.

A method for applying the resin composition onto the transparent substrate 2 is not particularly limited, and a publicly known method can be used. Examples of the coating method include a micro gravure coating method, a wire bar coating method, a direct gravure coating method, a die coating method, a dip coating method, a spray coating method, a reverse roll coating method, a curtain coating method, a comma coating method, a knife coating method, a spin coating method, and the like.

The conditions for drying the resin composition applied on the transparent substrate 2 are not particularly limited, and may be naturally dried or may be artificially dried to adjust drying humidity, drying time, and the like. As the light when curing the ultraviolet curable resin composition, energy rays such as gamma rays, alpha rays, electron beams or the like can be applied in addition to ultraviolet rays.

Furthermore, the conductive layered product 1A illustrated in FIG. 2 can be produced by forming the resin layer 6 on at least one surface of the transparent substrate 2, and then forming the first metal oxide layer 3, the metal layer 4, and the second metal oxide layer 5 in this order on the resin layer 6 using the thin film forming device described above.

### EXAMPLES

Examples of the present technology will be described below. In the present example, as illustrated in FIG. 1 for example, a conductive layered product 1 where the first metal oxide layer 3, the metal layer 4, and the second metal oxide layer 5 are layered in this order on one surface of the transparent substrate 2, or as illustrated in FIG. 2 for example, a conductive layered product 1A where the resin layer 6, the first metal oxide layer 3, the metal layer 4, and the second metal oxide layer 5 are layered in this order on one surface of the transparent substrate 2 is manufactured. Then, the total light transmittance and the surface resistance value of the produced conductive layered product are evaluated.

### <Arithmetic Mean Roughness (Ra)>

Using an atomic force microscope (Atomic Force Microscopy: AFM), the arithmetic mean roughness (Ra) of the transparent substrate surface or resin layer surface before and after film formation was measured. The results are shown in Table 3.

### <Total Light Transmittance>

The total light transmittance of the conductive layered product was measured using "NDH5000 (manufactured by Nippon Denshoku Industries Co., Ltd)" in accordance with "JIS K-7105." The results are shown in Table 3.

### <Surface Resistance Value>

The surface resistance value of the conductive layered product was measured in accordance with "JIS K-7194" using a contact-type resistance measuring device, "Loresta GP (Registered Trademark) (manufactured by Dia Instruments Co., Ltd.)." It was determined that those that did not become below 10 Q/square, which is an index of the surface resistance value, could not withstand practical use. The results are shown in Table 3.

### <Example 1>

The resin compositions for resin layer formation of the compositions shown in Table 1 were prepared. The resin composition is prepared by dissolving an acrylate, a photopolymerization initiator, and a leveling agent in a solvent.

**[Table 1]**

| | Name of Product | Brand | Structure | Combination ratio |
|---|---|---|---|---|
| Acrylate | CN968 | Sartomer | Hexafunctional aliphatic urethane acrylate with polyester backbone | 11% |
| | SR444 | Sartomer | Pentaerythritol triacrylate | 10% |
| | SR610 | Sartomer | Polyethylene glycol (600) diacrylate (molecular weight of polyethylene glycol chain: about 600) | 15% |
| Photopolymerization initiator | Irgacure184 | BASF | Hydroxy-cyclohexyl-phenyl-ketone | 3% |
| Solvent | PGMA | - | Propylene glycol-monomethyl ether acetate | 52% |
| | butyl acetate | - | - | 9% |
| Leveling agent | BYK377 | BYK | Hydroxyl group-containing polyether-modified polydimethylsiloxane | 0.01 by weight part per 100 by weight part of the above total |

As a transparent substrate, a prepared photocurable resin composition is applied on a TAC film having the surface arithmetic mean roughness of 0.3 nm and a thickness of 80 µm by a bar coater, and then the resin composition is photopolymerized to form a resin layer having a thickness of 3.5 µm.

A first metal oxide layer, a metal layer, and a second metal oxide layer are sequentially formed on a resin layer formed on a TAC film using the thin film forming device described in Japanese Unexamined Patent Application Publication No. 2014-34701 illustrated in FIG. 3.

The thin film forming device can simultaneously and sequentially layer a plurality of thin films of materials, and in the present example, targets of 50 atom% tin-containing zinc oxide (hereinafter referred to as "50 atm%Sn-Zn-O" and the like), silver, and 2 atom% aluminum-containing zinc oxide are arranged in this order from a side close to a film unwinding side. Each target is connected to an independent power source, and can discharge by supplying any power. Furthermore, each target is housed in an independent container, and only a slight gap is provided in the vicinity of the can roll in the partition wall separating the target, and it is possible to realize substantially different gas atmospheres.

After evacuating the entire vacuum chamber of the thin film forming device to 1×10 ⁻³ Pa or less, argon gas is introduced into a first cathode part of the vacuum chamber while being adjusted by a mass flow controller so as to have a flow rate of 150 sccm at the first cathode part where 50 atm%Sn-Zn-O is installed, and a film is formed by sputtering by applying electric power to a 50 atm%Sn-Zn-O target and discharging. At this time, in order to suppress light absorption of 50 atm%Sn-Zn-O due to insufficient oxygen, 6 sccm of oxygen was added, and a transparent oxide layer was formed. The film travel speed at this time was 3m/min. The power was adjusted so that a 50 atm%Sn-Zn-O of 53 nm thickness could be formed at a travel speed of 3 m/min after the relationship between power and film thickness was measured in advance.

After a 50 atm%Sn-Zn-O is formed in a first cathode part, a silver thin film is formed in a second cathode part. Specifically, argon gas is introduced into the second cathode part of the vacuum chamber while being adjusted by a mass flow controller so as to have a flow rate of 450 sccm in the second cathode part, and a film is formed by sputtering by applying electric power to the silver target and discharging. In the present example, two adjacent cathodes were used, but it is not necessary to use two adjacent cathodes. Depending on the device configuration, one cathode chamber may not be used, and the entire cathode chamber may be made to be a partition. After the relationship between power and film thickness was measured in advance, the power was adjusted so that a thin silver film with a thickness of 9 nm could be formed at a travel speed of 3 m/min.

After a silver thin film is formed in the second cathode part, a 2 atom% aluminum-containing zinc oxide is formed in the third cathode part. Specifically, argon gas is introduced into the third cathode part of the vacuum chamber while being adjusted by a mass flow controller so as to have a flow rate of 150 sccm in the third cathode part, and a film is formed by sputtering by applying electric power to the 2 atom% aluminum-containing zinc oxide target and discharging. At this time, a small amount of oxygen, separate from argon gas, is introduced while being adjusted by a mass flow controller, and the amount of oxygen is adjusted so as not to cause conductivity defects due to oxygen shortage and excessive oxygen, and a favorable transparent conductive oxide is obtained. In the present example, two adjacent cathodes were used, but it is not necessary to use two adjacent cathodes. Depending on the device configuration, one cathode chamber may not be used, and the entire cathode chamber may be made to be a partition. After the relationship between power and film thickness was measured in advance, the power was adjusted so that a 2 atom % aluminum containing zinc oxide with a thickness of 44 nm could be formed at a travel rate of 3 m/min.

After forming the three layers, the film is continuously wound, and after winding the film that is the configuration in FIG. 2, the air is introduced into the entire device, and the sample is taken out and used as a sample.

### <Example 2>

The sample was prepared under the same conditions as Example 1 except that the transparent substrate was changed to a polycarbonate film having the surface arithmetic mean roughness of 0.6 nm and a thickness of 100 µm, and a resin layer was not formed on the polycarbonate film.

### <Example 3>

Samples were prepared under the same conditions as Example 1 other than photopolymerizing the resin composition of the compositions shown in Table 2 and forming a resin layer with the surface arithmetic mean roughness of 2.0 nm and a thickness of 3.5 µm. The ratio (%) of each component shown in Table 2 represents weight % (wt%).

**[Table 2]**

| | Name of Product | Brand | Structure | Example 3 | Example 4 | Example 5 |
|---|---|---|---|---|---|---|
| Acrylate | CN968 | Sartomer | Hexafunctional aliphatic urethane acrylate with polyester backbone | 8.89% | 9.52% | 7.62% |
| | SR444 | Sartomer | Pentaerythritol triacrylate | 7.78% | 8.33% | 6.66% |
| | SR610 | Sartomer | Polyethylene glycol (600) diacrylate (molecular weight of polyethylene glycol chain: about 600) | 12.22% | 13.09% | 10.47% |
| Photopolymerization initiator | Irgacure 184 | BASF | Hydroxy-cyclohexyl-phenyl-ketone | 2.22% | 2.38% | 1.90% |
| Solvent | PGMA | - | Propylene glycol- monomethyl ether acetate | 33.33% | 35.73% | 28.58% |
| | Butyl acetate | - | - | 5.56% | 5.95% | 4.76% |
| Silica fine particle | IPA-ST-L | Nissan Chemical | Silica sol (Particle size 40-50 nm solvent IPA, 30% solid content) | 30% (22.44wt% in solid content) | 25% (18.37wt% in solid content) | - |
| | IPA-ST | Nissan Chemical | Silica sol (Particle size 10-15 nm, solvent IPA, 30% solid content) | | | 40% (31.05% wt in solid content) |
| Leveling agent | BYK377 | BYK | Hydroxyl group-containing polyether-modified polydimethylsiloxane | 0.01 by weight part per 100 by weight part of the above total | 0.01 by weight part per 100 by weight part of the above total | 0.01 by weight part per 100 by weight part of the above total |

| | Name of Product | Brand | Structure | Comparative Example 1 | Comparative Example 2 | Comparative Example 3 | Comparative Example 4 |
|---|---|---|---|---|---|---|---|
| Acrylate | CN968 | Sartomer | Hexafunctional aliphatic methane acrylate with polyester backbone | 7.62% | 7.62% | 6.99% | 9.52% |
| | SR444 | Sartomer | Pentaerythritol triacrylate | 6.66% | 6.66% | 6.11% | 8.33% |
| | SR610 | Sartomer | Polyethylene glycol (600) diacrylate (molecular weight of polyethylene glycol chain; about 600) | 10.47% | 10.47% | 9.61% | 13.09% |
| Photopolymerization initiator | Irgacure 184 | BASF | Hydroxy-cyclohexyl-phenyl-ketone | 1.90% | 1.90% | 1.75% | 2.38% |
| Solvent | PGMA | - | Propylene glycol- monomethyl ether acetate | 28.58% | 28.58% | 26.17% | 35.73% |
| | Butyl acetate | - | - | 4.76% | 4.76% | 4.37% | 5.95% |
| Silica fine particle | IPA-ST-L | Nissan Chemical | Silica sol (Particle size 40-50 nm, solvent IPA, 30% solid content) | - | 40% (31.05wt% in solid content) | 45% (35.57wt% in solid content) | - |
| | IPA-ST-ZL | Nissan Chemical | Silica sol (Particle size 70-100 nm, solvent IPA, 30% solid content) | 40% (31.05wt% in solid content ) | - | - | 25% (18.37wt% in solid content ) |
| Leveling agent | BYK377 | BYK | Hydroxyl group-containing polyether-modified polydimethylsiloxane | 0.01 by weight part per 100 by weight part of the above total | 0.01 by weight part per 100 by weight part of the above total | 0.01 by weight part per 100 by weight part of the above total | 0.01 by weight part per 100 by weight part of the above total |

### <Example 4>

Samples were prepared under the same conditions as Example 1 other than photopolymerizing the resin composition of the compositions shown in Table 2 and forming a resin layer with the surface arithmetic mean roughness of 1.6 nm and a thickness of 3.5 µm.

### <Example 5>

Samples were prepared under the same conditions as Example 1 other than photopolymerizing the resin composition of the compositions shown in Table 2 and forming a resin layer with the surface arithmetic mean roughness of 0.7 nm and a thickness of 3.5 µm.

### <Comparative Example 1>

Samples were prepared under the same conditions as Example 1 other than photopolymerizing the resin composition of the compositions shown in Table 2 and forming a resin layer with the surface arithmetic mean roughness of 6.0 nm and a thickness of 3.5 µm.

### <Comparative Example 2>

The sample was prepared under the same conditions as Example 1 except that the transparent substrate was changed to polycarbonate film with a thickness of 100 µm, and the resin composition of the composition shown in Table 2 was photopolymerized to form a resin layer with the surface arithmetic mean roughness of 2.4 nm and a thickness of 5 µm.

### <Comparative Example 3>

Samples were prepared under the same conditions as Example 1 other than photopolymerizing the resin composition of the compositions shown in Table 2 and forming a resin layer with the surface arithmetic mean roughness of 2.8 nm and a thickness of 3.5 µm.

### <Comparative Example 4>

The sample was prepared under the same conditions as Example 1 except that the transparent substrate was changed to polycarbonate film with a thickness of 100 µm, and that the resin composition of the composition shown in Table 2 was photopolymerized to form a resin layer with the surface arithmetic mean roughness of 3.8 nm and a thickness of 3.5 µm.

**[Table 3]**

| | | Transparent Substrate | Resin Layer | SiO₂ filler | Filler particle size | Filler density | Configuration | | | Ra(nm) of surface of transparent substrate or resin layer | Ra(nm) of surface of conductive film (top surface after film forming) | Total light transmittance (%) | Surface resistance value (Q/square) |
|---|---|---|---|---|---|---|---|---|---|---|---|---|---|
| | | | | | | | 1 Layer | 2 Layer | 3 Layer | | | | |
| | | | | | | | 53nm | 9nm | 44nm | | | | |
| Example | 1 | TAC | Present | None | - | - | ZTO | Ag | AZO | 0.3 | 0.4 | 91.2 | 9.5 |
| | 2 | PC | None | - | - | - | ZTO | Ag | AZO | 0.6 | 0.4 | 91 | 9.3 |
| | 3 | TAC | Present | Present | 50 nm | 30 wt% (22.44wt% in solid content ) | ZTO | Ag | AZO | 2 | 2.2 | 90.6 | 9.8 |
| | 4 | TAC | Present | Present | 50 nm | 25 wt% (18.37wt% in solid content ) | ZTO | Ag | AZO | 1.6 | 1.8 | 90.7 | 9.6 |
| | 5 | TAC | Present | Present | 15 nm | 40 wt% (31.0 5wt"1o in solid content ) | ZTO | Ag | AZO | 0.7 | 0.6 | 91 | 9.4 |
| Comparative Example | 1 | TAC | Present | Present | 80 nm | 40 wt% (31.0 5wt"1o in solid content ) | ZTO | Ag | AZO | 6 | 6.7 | 88.9 | 10.9 |
| | 2 | PC | Present | Present | 50 nm | 40 wt% (31.0 5wt"1o in solid content ) | ZTO | Ag | AZO | 2.4 | 2.9 | 86.5 | 11.3 |
| | 3 | TAC | Present | Present | 50 nm | 45 wt% (35.57wt% in solid content ) | ZTO | Ag | AZO | 2.8 | 3.5 | 88.5 | 11 |
| | 4 | PC | Present | Present | 80 nm | 25 wt% (18.37wt% in solid content ) | ZTO | Ag | AZO | 3.8 | 4.6 | 87.2 | 11.5 |

From the results of the Examples and Comparative Examples shown in Table 3, it was found that in a conductive layered product where a first metal oxide layer, a metal layer, and a second metal oxide layer are layered in this order from the transparent substrate side on at least one surface of a transparent substrate, by the arithmetic mean roughness of the interface of the first metal oxide layer on the transparent substrate side being 2.0 nm or less, both low electrical resistance and high transmittance can be achieved.

Furthermore, from the results of Examples 1 and 3 to 5, it was found that also in a conductive layered product further including a resin layer between the transparent substrate and the first metal oxide layer, wherein the interface of the first metal oxide layer on the transparent substrate side is the surface of the resin layer, both low electrical resistance and high transmittance can be achieved when the arithmetic mean roughness of the interface of the first metal oxide layer on the transparent substrate side is 2.0 nm or less. That is, it was found that also in the conductive layered product 1A, wherein the resin layer 6, the first metal oxide layer 3, the metal layer 4, and the second metal oxide layer 5 are layered in this order from the transparent substrate 2 side on one surface of the transparent substrate 2, both low electrical resistance and high transmittance can be achieved when the arithmetic mean roughness of the surface of the resin layer 6 on the first metal oxide layer 3 side is 2.0 nm or less.

Furthermore, from the results of Examples 3 to 5, it was found that also in a conductive layered product further including a resin layer containing a filler between the transparent substrate and the first metal oxide layer, wherein the interface of the first metal oxide layer on the transparent substrate side is the surface of the resin layer, both low electrical resistance and high transmittance can be achieved when the arithmetic mean roughness of the interface of the first metal oxide layer on the transparent substrate side is 2.0 nm or less. That is, it was found that also in the conductive layered product 1A, wherein the resin layer 6 containing the filler, the first metal oxide layer 3, the metal layer 4, and the second metal oxide layer 5 are layered in this order from the transparent substrate 2 side on one surface of the transparent substrate 2, both low electrical resistance and high transmittance can be achieved when the arithmetic mean roughness of the surface of the first metal oxide layer 3 side of the resin layer 6 containing the filler is 2.0 nm or less.

In the Comparative Examples it was found that they were difficult to achieve both low electrical resistance and high transmittance because the arithmetic mean roughness of the interface of the first metal oxide layer on the transparent substrate side exceeded 2.0 nm.

As described above, the effects of the present technology can be demonstrated from the results of the examples and the comparative examples. In addition, the present technology is not limited to the examples described above, and it is clear that a person having ordinary knowledge in the field of the present technology can conceive of various examples of changes or modifications within the scope of the claims.

### REFERENCE NUMBERS

1, 1A Conductive layered product, 2 Transparent substrate, 3 First metal oxide layer, 4 Metal layer, 5 Second metal oxide layer, 6 Resin layer, 10 Base film, 11 Unwinding roll, 12 Winding roll, 21 First can roll, 22 Second can roll, 31 Optical Monitor, 32 Optical Monitor, SP Sputter Chamber

## Claims

1. A conductive layered product, comprising:
a transparent substrate;
optionally a resin layer;
a first metal oxide layer;
a metal layer containing 90 atom% or more of silver; and
a second metal oxide layer,
wherein the optional resin layer, the first metal oxide layer, the metal layer, and the second metal oxide layer are layered on a surface of the transparent substrate in this order from a transparent substrate side so as to be in contact with each other, and
an arithmetic mean roughness of a surface of the transparent substrate that contacts the first metal oxide layer is 2.0 nm or less, or in case the optional resin layer is comprised, an arithmetic mean roughness of a surface of the resin layer on the first metal oxide layer side is 2.0 nm or less,
**characterised in that**
the first metal oxide layer is composed of zinc tin oxide (ZTO); and
the second metal oxide layer is composed of an aluminum-doped zinc oxide (AZO).

2. The conductive layered product according to claim 1, wherein an amount of tin in the zinc tin oxide (ZTO) in the first metal oxide layer is from 10 to 90 atom%.

3. The conductive layered product according to claim 1 or 2, wherein the conductive layered product has a surface resistance value of 10 Q/square or less, and a total light transmittance of 90% or more.

4. An optical device comprising the conductive layered product according to any one of claims 1 to 3.

5. A touch panel comprising a positive electrode and a negative electrode, wherein at least one of the positive electrode and the negative electrode comprises the conductive layered product of any one of claims 1 to 3.

6. A light-dimming element comprising a positive electrode and a negative electrode, wherein at least one of the positive electrode and the negative electrode comprises the conductive layered product of any one of claims 1 to 3.

7. An electrophoretic optical element comprising a positive electrode and a negative electrode, wherein at least one of the positive electrode and the negative electrode comprises the conductive layered product of any one of claims 1 to 3.

8. A light-emitting element comprising a positive electrode and a negative electrode, wherein at least one of the positive electrode and the negative electrode comprises the conductive layered product of any one of claims 1 to 3.

9. An antenna comprising a positive electrode and a negative electrode, wherein at least one of the positive electrode and the negative electrode comprises the conductive layered product according to any one of claims 1 to 3.

10. A manufacturing method for a conductive layered product comprising:
layering an optional resin layer, a first metal oxide layer, a metal layer containing 90 atom% or more of silver, and a second metal oxide layer on a surface of a transparent substrate in this order from a transparent substrate side so as to be in contact which each other,
wherein an arithmetic mean roughness of a surface of the transparent substrate that contacts the first metal oxide layer is 2.0 nm or less, or in case the optional resin layer is comprised, an arithmetic mean roughness of a surface of the resin layer on the first metal oxide layer side is 2.0 nm or less,
**characterised in that**
the first metal oxide layer is composed of zinc tin oxide (ZTO); and
the second metal oxide layer is composed of an aluminum-doped zinc oxide (AZO).

## Patentansprüche

1. Leitfähiges Schichtprodukt, umfassend:
ein transparentes Substrat;
optional eine Harzschicht;
eine erste Metalloxidschicht;
eine Metallschicht, die 90 Atom-% oder mehr an Silber enthält; und
eine zweite Metalloxidschicht,
wobei die optionale Harzschicht, die erste Metalloxidschicht, die Metallschicht und die zweite Metalloxidschicht auf einer Oberfläche des transparenten Substrats in dieser Reihenfolge von einer Seite des transparenten Substrats aus so geschichtet sind, dass sie miteinander in Kontakt stehen, und
eine arithmetische mittlere Rauheit einer Oberfläche des transparenten Substrats, die die erste Metalloxidschicht kontaktiert, 2,0 nm oder weniger beträgt, oder, falls die optionale Harzschicht umfasst ist, eine arithmetische mittlere Rauheit einer Oberfläche der Harzschicht auf der Seite der ersten Metalloxidschicht 2,0 nm oder weniger beträgt,
**dadurch gekennzeichnet, dass**
die erste Metalloxidschicht aus Zink-Zinn-Oxid (ZTO) besteht; und
die zweite Metalloxidschicht aus einem Aluminium-dotierten Zinkoxid (AZO) besteht.

2. Leitfähiges Schichtprodukt nach Anspruch 1, wobei ein Zinnanteil im Zink-Zinn-Oxid (ZTO) in der ersten Metalloxidschicht 10 bis 90 Atom-% beträgt.

3. Leitfähiges Schichtprodukt nach Anspruch 1 oder 2, wobei das leitfähige Schichtprodukt einen Oberflächenwiderstandswert von 10 Ω/Quadrat oder weniger und eine Gesamtlichtdurchlässigkeit von 90 % oder mehr aufweist.

4. Optische Vorrichtung, umfassend das leitfähige Schichtprodukt nach einem der Ansprüche 1 bis 3.

5. Touchpanel, umfassend eine positive Elektrode und eine negative Elektrode, wobei mindestens eine der positiven Elektrode und der negativen Elektrode das leitfähige Schichtprodukt nach einem der Ansprüche 1 bis 3 umfasst.

6. Lichtdimmendes Element, umfassend eine positive Elektrode und eine negative Elektrode, wobei mindestens eine der positiven Elektrode und der negativen Elektrode das leitfähige Schichtprodukt nach einem der Ansprüche 1 bis 3 umfasst.

7. Elektrophoretisches optisches Element, umfassend eine positive Elektrode und eine negative Elektrode, wobei mindestens eine der positiven Elektrode und der negativen Elektrode das leitfähige Schichtprodukt nach einem der Ansprüche 1 bis 3 umfasst.

8. Lichtemittierendes Element, umfassend eine positive Elektrode und eine negative Elektrode, wobei mindestens eine der positiven Elektrode und der negativen Elektrode das leitfähige Schichtprodukt nach einem der Ansprüche 1 bis 3 umfasst.

9. Antenne, umfassend eine positive Elektrode und eine negative Elektrode, wobei mindestens eine der positiven Elektrode und der negativen Elektrode das leitfähige Schichtprodukt nach einem der Ansprüche 1 bis 3 umfasst.

10. Herstellungsverfahren für ein leitfähiges Schichtprodukt, umfassend:
Schichten einer optionalen Harzschicht, einer ersten Metalloxidschicht, einer Metallschicht, die 90 Atom-% oder mehr an Silber enthält, und einer zweiten Metalloxidschicht auf eine Oberfläche eines transparenten Substrats in dieser Reihenfolge von einer Seite des transparenten Substrats aus so, dass sie miteinander in Kontakt stehen,
wobei eine arithmetische mittlere Rauheit einer Oberfläche des transparenten Substrats, die die erste Metalloxidschicht kontaktiert, 2,0 nm oder weniger beträgt, oder, falls die optionale Harzschicht umfasst ist, eine arithmetische mittlere Rauheit einer Oberfläche der Harzschicht auf der Seite der ersten Metalloxidschicht 2,0 nm oder weniger beträgt,
**dadurch gekennzeichnet, dass**
die erste Metalloxidschicht aus Zink-Zinn-Oxid (ZTO) besteht; und
die zweite Metalloxidschicht aus einem Aluminium-dotierten Zinkoxid (AZO) besteht.

## Revendications

1. Produit stratifié conducteur, comprenant :
un substrat transparent ;
en option une couche de résine ;
une première couche d'oxyde métallique ;
une couche métallique contenant 90 % atomique ou plus d'argent ; et
une seconde couche d'oxyde métallique,
dans lequel la couche de résine optionnelle, la première couche d'oxyde métallique, la couche métallique et la seconde couche d'oxyde métallique sont stratifiées sur une surface du substrat transparent dans cet ordre depuis un côté de substrat transparent de manière à être en contact l'une avec l'autre, et
une rugosité arithmétique moyenne d'une surface du substrat transparent qui vient en contact avec la première couche d'oxyde métallique est de 2,0 nm ou moins, ou dans le cas où la couche de résine optionnelle est comprise, une rugosité arithmétique moyenne d'une surface de la couche de résine sur le côté de première couche d'oxyde métallique est de 2,0 nm ou moins,
**caractérisé en ce que**
la première couche d'oxyde métallique est composée d'oxyde de zinc et d'étain (ZTO) ; et
la seconde couche d'oxyde métallique est composée d'un oxyde d'aluminium-zinc dopé (AZO).

2. Produit stratifié conducteur selon la revendication 1, dans lequel une quantité d'étain dans l'oxyde de zinc et d'étain (ZTO) dans la première couche d'oxyde métallique va de 10 à 90 % atomique.

3. Produit stratifié conducteur selon la revendication 1 ou 2, dans lequel le produit stratifié conducteur a une valeur de résistance en surface de 10 Ω/carré ou moins et une transmittance lumineuse totale de 90 % ou plus.

4. Dispositif optique comprenant le produit stratifié conducteur selon l'une quelconque des revendications 1 à 3.

5. Écran tactile comprenant une électrode positive et une électrode négative, dans lequel au moins une de l'électrode positive et l'électrode négative comprend le produit stratifié conducteur selon l'une quelconque des revendications 1 à 3.

6. Élément gradateur de lumière comprenant une électrode positive et une électrode négative, dans lequel au moins une de l'électrode positive et l'électrode négative comprend le produit stratifié conducteur selon l'une quelconque des revendications 1 à 3.

7. Élément optique électrophorétique comprenant une électrode positive et une électrode négative, dans lequel au moins une de l'électrode positive et l'électrode négative comprend le produit stratifié conducteur selon l'une quelconque des revendications 1 à 3.

8. Élément émetteur de lumière comprenant une électrode positive et une électrode négative, dans lequel au moins une de l'électrode positive et l'électrode négative comprend le produit stratifié conducteur selon l'une quelconque des revendications 1 à 3.

9. Antenne comprenant une électrode positive et une électrode négative, dans laquelle au moins une de l'électrode positive et l'électrode négative comprend le produit stratifié conducteur selon l'une quelconque des revendications 1 à 3.

10. Procédé de fabrication pour un produit stratifié conducteur comprenant :
stratifier une couche de résine optionnelle, une première couche d'oxyde métallique, une couche métallique contenant 90 % atomique ou plus d'argent et une seconde couche d'oxyde métallique sur une surface d'un substrat transparent dans cet ordre depuis un côté de substrat transparent de manière à être en contact l'une avec l'autre,
dans lequel une rugosité arithmétique moyenne d'une surface du substrat transparent qui vient en contact avec la première couche d'oxyde métallique est de 2,0 nm ou moins, ou dans le cas où la couche de résine optionnelle est comprise, une rugosité arithmétique moyenne d'une surface de la couche de résine sur le côté de première couche d'oxyde métallique est de 2,0 nm ou moins,
**caractérisé en ce que**
la première couche d'oxyde métallique est composée d'oxyde de zinc et d'étain (ZTO) ; et
la seconde couche d'oxyde métallique est composée d'un oxyde d'aluminium-zinc dopé (AZO).
